# EUROPEAN PATENT APPLICATION

(11) **EP 4 618 302 A1**
(43) Date of publication of application: **17.09.2025**
(21) Application number: 24207227.0
(22) Date of filing: 17.10.2024
(51) Int. Cl.: H01M 50/533, H01M 50/536, H01M 50/557, H01M 50/566, H01M 50/586, G01R 31/36

(54) **SECONDARY BATTERY**

(30) Priority: 15.03.2024 KR 20240036590
(71) Applicant: SAMSUNG SDI CO., LTD., Yongin-si, Gyeonggi-do 17084 (KR)
(72) Inventor: KIM, Ji Hwan, 17084 Yongin-si (KR); YONG, Jun Sun, 17084 Yongin-si (KR); BAE, Kwang Soo, 17084 Yongin-si (KR); LEE, Jun Hyung, 17084 Yongin-si (KR); KIM, Jung Soo, 17084 Yongin-si (KR); ROH, Heyoung Cheoul, 17084 Yongin-si (KR)
(74) Representative: Marks & Clerk LLP

(57) **Abstract**

A secondary battery which is configured such that it can checking whether a terminal and a current collector plate are in close contact with each other when the terminal and the current collector plate are welded to thereby improve weldability between the terminal and the current collector plate and reduce welding defects is disclosed. The secondary battery includes an electrode assembly provided with an electrode tab, a current collector electrically coupled to the electrode tab, a case accommodating the electrode assembly and the current collector, a cap plate sealing the case, and a terminal mechanically and electrically coupled to the current collector and disposed on the cap plate. The current collector includes an electrode current collector plate welded to the electrode tab, and a terminal current collector plate extending from the electrode current collector plate towards the terminal and including a protrusion welded to the terminal. The protrusion comprises a projection that passes through the terminal at a central area of thereof so as to be exposed to outside of the secondary battery.

## Description

### BACKGROUND

### 1. Field

Embodiments relate to a secondary battery.

### 2. Description of the Related Art

A secondary battery is a power storage system that provides excellent energy density to change electrical energy into chemical energy so as to store the chemical energy. As compared to non-rechargeable primary batteries, secondary batteries are rechargeable and are widely used for IT devices such as smartphones, cellular phones, laptops, tablet PCs, and the like. In recent years, interest in electric vehicles has increased to prevent or reduce environmental pollution, and, accordingly, high-capacity secondary batteries are being adopted for the electric vehicles. Such secondary batteries are required to have characteristics such as high density, high output, and stability.

The above information disclosed in this Background section is for enhancement of understanding of the background of the present disclosure, and therefore, it may contain information that does not constitute related (or prior) art.

### SUMMARY

Aspects of some embodiments of the present disclosure provide a secondary battery in which, if welding is performed between a terminal and a current collector plate, a protrusion disposed on an upper end surface of the current collector plate is visible through a hole of the terminal to determine whether objects to be welded are in close contact with each other.

These and other aspects and features of the present disclosure will be described in or will be apparent from the following description of embodiments of the present disclosure.

According to some embodiments, a secondary battery includes: an electrode assembly provided with an electrode tab; a current collector electrically coupled to the electrode tab; a case accommodating the electrode assembly and the current collector; a cap plate sealing the case; and a terminal mechanically and electrically coupled to the current collector and disposed on the cap plate, wherein the current collector includes: an electrode current collector plate welded to the electrode tab; and a terminal current collector plate extending from the electrode current collector plate towards the terminal and including a protrusion welded to the terminal, wherein the protrusion comprises a projection that passes through the terminal at a central area thereof so as to be exposed to outside of the secondary battery.

The terminal may include: a flat terminal plate; and a welding area provided with a terminal groove that is concave inward at a center of an outer surface of the terminal plate, the welding area having a thickness that is less than a thickness of a peripheral area of the terminal plate.

The terminal groove may be provided in an area corresponding to the protrusion.

The terminal may further include a through-hole that extends between an inner surface and an outer surface of the welding area.

The through-hole of the terminal may have an inner diameter that is greater than or equal to an outer diameter of the projection.

An outer surface of the projection and the outer surface of the welding area are offset from each other.

The projection may protrude beyond the outer surface of the welding area.

At least part of area of an outer surface of the protrusion may be in contact with the inner surface of the welding area.

A welding bead is formed between the terminal and the terminal current collector plate and the welding bead may have a circular ring shape and may be spaced apart from the through-hole of the terminal.

The terminal current collector plate may further include a plate-shaped body part that is in contact with and welded to the electrode current collector plate, and the protrusion may protrude outward from an outer surface of the body part.

The protrusion may be cylindrically shaped and have a circular surface coupled to the body part of the terminal current collector plate.

The protrusion may include a curved outer surface that is in contact with and welded to the terminal.

The outer surface of the protrusion may have a curved surface that is convex outward.

An inner surface of the terminal may be in contact with and welded to the outer surface of the protrusion, and the inner surface of the terminal includes a curved surface with a shape corresponding to a shape of the outer surface of the protrusion.

The protrusion may include a planar outer surface that is in contact with and welded to the terminal.

The outer surface of the protrusion is formed in a flat plane.

An inner surface of the terminal may be in contact with and welded to the outer surface of the protrusion, and the inner surface of the terminal may be formed as a plane with a shape corresponding to a shape of the outer surface of the protrusion.

The electrode current collector plate may include: a central portion including an outer surface that is coupled to the terminal current collector plate by welding; and edge portions extending in opposite directions from the central portion and welded to the electrode tab of the electrode assembly, wherein the central portion may protrude outward with respect to the edge portions.

The electrode current collector plate may further include connection parts that are inclined from the central portion to the edge portions.

At least some of the above and other features of the invention are set out in the claims.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 illustrates a perspective view of a secondary battery according to embodiments;
FIG. 2 illustrates a cross-sectional view taken along line 2-2' in the secondary battery of FIG. 1;
FIG. 3 illustrates an enlarged partial cross-sectional view of a portion 3 of FIG. 2;
FIG. 4 illustrates an enlarged view of a portion 4 of FIG. 3;
FIG. 5 illustrates an exploded perspective view before a terminal and a current collector of the secondary battery are coupled to each other in FIG. 2;
FIG. 6 illustrates a front cross-sectional view taken vertically in FIG. 5;
FIG. 7 illustrates a partial cross-sectional view of a current collector plate according to embodiments;
FIG. 8 illustrates a front cross-sectional view of the current collector plate, the terminal, to which the current collector plate is coupled, and an insulating member in FIG. 7;
FIG. 9 is a perspective view of an example of a battery module;
FIGS. 10A and 10B illustrate perspective views of an example of a battery pack; and
FIGS. 11A and 11B illustrate perspective and side views of examples of a vehicle body and a vehicle components.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it will be understood that when an element is referred to as being "coupled," "linked" or "connected" to another element, the elements may be directly "coupled," "linked" or "connected" to each other, or an intervening element may be present therebetween, through which the element may be "coupled," "linked" or "connected" to another element. In addition, when a part is referred to as being "electrically coupled" to another part, the part can be directly connected to another part or an intervening part may be present therebetween such that the part and another part are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

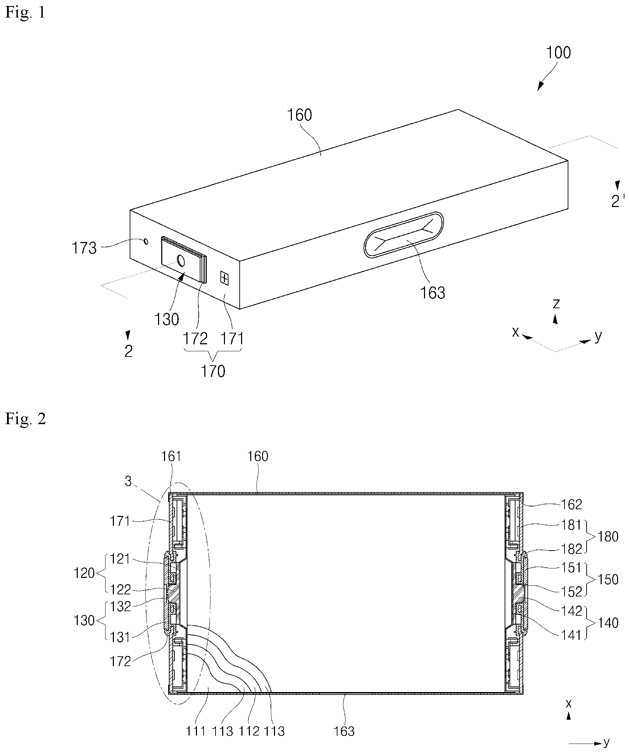

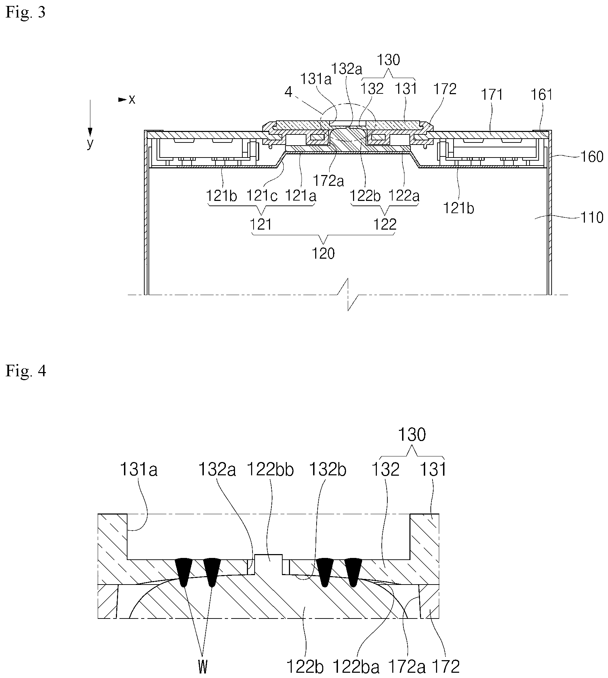

FIG. 1 is a perspective view of the secondary battery according to an embodiment of the present invention. FIG. 2 illustrates a cross-sectional view taken along line 2-2' in the secondary battery of FIG. 1; FIG. 3 illustrates an enlarged partial cross-sectional view of a portion 3 of FIG. 2; FIG. 4 illustrates an enlarged view of a portion 4 of FIG. 3.

Referring to FIGS. 1 to 4, a secondary battery 100 may include an electrode assembly 110, a first current collector 120, a first terminal 130, a case 160, and a first cap assembly 170. In some embodiments, the secondary battery 100 may further include a second current collector 140, a second terminal 150, and a second cap assembly 180 (optional).

An electrode assembly 110 may be formed by winding or stacking a stack of a first electrode plate 111, a separator 113, and a second electrode plate 112, which are formed as thin plates or films. When the electrode assembly 110 is a wound stack, a winding axis may be parallel to the longitudinal direction (e.g., a second direction y) of the case 160. In other embodiments, the electrode assembly 110 may be a stack type rather than a winding type, and the shape of the electrode assembly 110 is not limited in the present disclosure. In addition, the electrode assembly may be a Z-stack electrode assembly in which a positive electrode plate and a negative electrode plate are inserted into both sides of a separator, which is then bent into a Z-stack. In addition, one or more electrode assemblies 110 may be stacked such that long sides of the electrode assemblies 110 are adjacent to each other and accommodated in the case 160, and the number of electrode assemblies 110 in the case is not limited in the present disclosure.

The first electrode plate 111 of the electrode assembly 110 may act as a positive electrode, and the second electrode plate 112 may act as a negative electrode. Of course, the reverse is also possible.

The first electrode plate 111 may be formed by applying a first electrode active material, such as a transition metal oxide, on a first electrode current collector formed of a metal foil, such as aluminum or an aluminum alloy. The first electrode plate 111 may include a first electrode tab (e.g., a first uncoated portion) that is a region to which the first electrode active material is not applied. The first electrode tab may act as a current flow path between the first electrode plate 111 and the first current collector 120. In some embodiments, the first electrode tab may be formed by being cut in advance to protrude to the one side of the electrode assembly 110 when the first electrode plate 111 is manufactured, or the first electrode plate 111 may protrude to the one side of the electrode assembly 110 more than (e.g., farther than or beyond) the separator 113 without being separately cut.

The second electrode plate 112 may be formed by applying a second electrode active material, such as graphite or carbon, to a second electrode current collector formed of a metal foil, such as copper, a copper alloy, nickel, or a nickel alloy. The second electrode plate 112 may include a second electrode tab (e.g., a second uncoated portion) that is a region to which the second electrode active material is not applied. The second electrode tab may act as a current flow path between the second electrode plate 112 and the second current collector 140. In some embodiments, when the second electrode plate 112 is manufactured, the second electrode tab may be formed by being cut in advance to protrude to other side (e.g., the opposite side) of the electrode assembly 110, or the second electrode tab may protrude to other side of the electrode assembly 110 more than (e.g., farther than or beyond) the separator 113 without being separately cut.

In some embodiments, a first electrode tab may be disposed on a side surface of a left end (or one end) of the electrode assembly 110, and a second electrode tab may be disposed on a side surface of a right end (the other end) of the electrode assembly 110. Here, for convenience of description, the left and right sides are defined according to the secondary battery as oriented in FIGS. 1 and 2, and the positions thereof may change when the secondary battery is rotated left and right or up and down. Hereinafter, each component will be described based on the secondary battery 100 illustrated in FIGS. 1 to 3.

In some examples, the separator 113 may be located between the first electrode plate 111 and the second electrode plate 112 to prevent short circuit therebetween while allowing lithium ions to move therebetween. The separator 113 may include, for example, polyethylene, polypropylene, or a composite film of polyethylene and polypropylene. In some examples, the separator 113 may be replaced with an inorganic solid electrolyte, such as a sulfide-based, oxide-based, or phosphate compound-based electrolyte that does not require a liquid or gel electrolyte.

The first electrode tab of the first electrode plate 111 and the second electrode tab of the second electrode plate 112 may be located at opposite end portions of the electrode assembly 110 described above. In some examples, the electrode assembly 110 may be accommodated in the case 160 together with an electrolyte.

In some examples, the electrolyte may include a lithium salt, such as lithium hexafluorophosphate (LiPF6) or lithium tetrafluoroborate (LiBF4), in an organic solvent, such as ethylene carbonate (EC), propylene carbonate (PC), diethyl carbonate (DEC), ethyl methyl carbonate (EMC), or dimethyl carbonate (DMC). The electrolyte may be in a liquid or gel form. In some examples, if an inorganic solid electrolyte is used, the liquid or gel electrolyte may be omitted.

In some embodiments, a compound capable of reversible intercalation and deintercalation of lithium (lithiated intercalation compound) may be used as the positive electrode active material constituting the first electrode active material layer. In some embodiments, one or more types of complex oxides of lithium and a metal selected from cobalt, manganese, nickel, and a combination thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c}(0.90≤a≤1.8, 0≤b≤0.5, 0≤c≤0.05); LiₐMn_{2-b}X_{b}O_{4-c}D_{c}(0.90≤a≤1.8, 0≤b≤0.5, 0≤c≤0.05); LiₐNi_{1-b-c}Co_{b}X_{c}O_{2-α}D_{α}(0.90≤a≤1.8, 0≤b≤0.5, 0≤c≤0.5, 0<α<2); LiₐNi_{1-b-c}Mn_{b}X_{c}0_{2-α}D_{α}(0.90≤a≤1.8, 0≤b≤0.5, 0≤c≤0.5, 0<α<2); LiₐNi_{b}Co_{c}L¹_{d}GₑO₂(0.90≤a≤1.8, 0≤b≤0.9, 0≤c≤0.5, 0≤d≤0.5, 0≤e≤0.1); LiₐNiG_{b}O₂(0.90≤a≤1.8, 0.001≤b≤0.1); LiₐCoG_{b}O₂(0.90≤a≤1.8, 0.001≤b≤0.1); LiₐMn_{1-b}G_{b}O₂(0.90≤a≤1.8, 0.001≤b≤0.1);
LiₐMn₂G_{b}O₄(0.90≤a≤1.8, 0.001≤b≤0.1); LiₐMn_{1-g}G_{g}PO₄(0.90≤a≤1.8, 0≤g≤0.5); Li_{(3-f)}Fe₂(PO₄)₃(O≤f≤2); LiₐFePO₄(0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a current collector and a positive electrode active material layer formed on the current collector. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The current collector may be aluminum (Al) but is not limited thereto.

In addition, the negative active material constituting the second electrode active material layer may include a material capable of reversibly intercalating/deintercalating lithium ions, a lithium metal, an alloy of the lithium metal, a material capable of doping and dedoping lithium, or transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOx (0 < x < 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a current collector and a negative electrode active material layer disposed on the current collector. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move. The non-aqueous organic solvent may be a carbonate-based, an ester-based, an ether-based, a ketone-based, an alcohol-based solvent, an aprotic solvent, and may be used alone or in combination of two or more. In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film of two or more layers thereof may be used.

The separator may include a porous substrate and a coating layer including an organic material, an inorganic material, or a combination thereof on one or both surfaces of the porous substrate. The organic material may include a polyvinylidene fluoride-based polymer or a (meth)acrylic polymer. The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto. The organic material and the inorganic material may be mixed in one coating layer or may be in the form of a coating layer containing an organic material and a coating layer containing an inorganic material that are laminated on each other.

In some embodiments, in the electrode assembly 110, the first current collector 120 and the second current collector 140 may be respectively coupled to the first electrode tab of the first electrode plate 111 and the second electrode tab of the second electrode plate 112, which are exposed at opposite sides of the electrode assembly 110. The first current collector 120 may be made of a metal and may be electrically connected to the first electrode plate 111 and the first terminal 130.

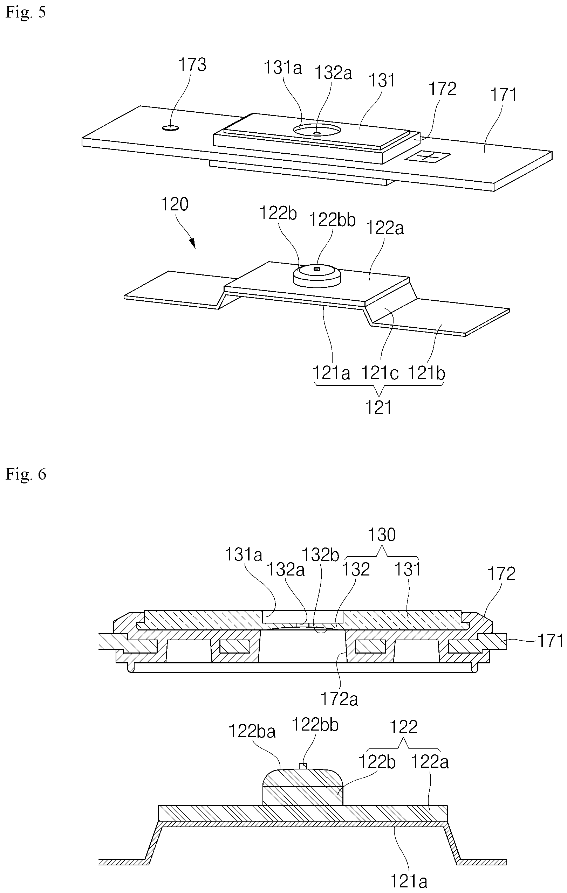

FIGS. 5 and 6 illustrate exploded perspective and cross-sectional views before the first terminal 130 and the first current collector 120 are coupled to each other. Referring to FIGS. 5 and 6, the first terminal 130 may be coupled to the first cap plate 171 through the first insulating member 172 and then coupled to the first current collector 120 through welding. Hereinafter, a relationship between the first current collector 120, the first terminal 130, and the first insulating member 172 will be described with reference to FIGS. 5 and 6.

In some embodiments, the first current collector 120 may be accommodated inside the case 160 and disposed between the first cap plate 171 and the electrode assembly 110. The first current collector 120 may include a first electrode current collector plate 121 that is in contact with and coupled to the first electrode tab (e.g., non-coating portion) of the first electrode plate 111 and a first terminal current collector plate 122 that is in contact with and coupled to the first terminal 130. The first current collector 120 may be made of aluminum or an aluminum alloy.

The first electrode current collector plate 121 may extend in a first direction x, which is a longitudinal direction of the first cap plate 171 and may have a substantially plate shape. The first electrode current collector plate 121 may have the same polarity as the first electrode plate 111. And the first electrode current collector plate 121 may be coupled to the electrode assembly 110 by welding (e.g., laser welding) while the first electrode current collector plate 121 is in contact with the first electrode tab exposed to one end of the electrode assembly 110.

The first electrode current collector plate 121 may include a center portion 121a having a central area protruding outward and an edge portion 121b extending in each of both opposite directions from the center portion 121a. An outer surface of the center portion 121a may be coupled to an inner surface of the first terminal current collector plate 122 by the welding.

The inner surface of the edge portion 121b may be welded and coupled to the first electrode tab of the electrode assembly 110. Relative to the edge portion 121b, the center portion 121a may protrude in an outward direction in which the first cap plate 171 is disposed. The center portion 121a may be spaced apart from one surface of the electrode assembly 110. And the center portion 121a and the edge portion 121b may be parallel to each other.

The first electrode current collector plate 121 may be further provided with an inclined connection portion 121c between the center portion 121a and the edge portion 121b. In some embodiments, a bent portion may be provided between the center portion 121a and the connection portion 121c and between the connection portion 121c and the edge portion 121b.

In some embodiments, the first electrode current collector plate 121 may include the connection portion 121c and the edge portion 121b, which are both provided at opposite sides of the center portion 121a in the first direction x. A planar size of the center portion 121a of the first electrode current collector plate 121 may be similar to that of the first terminal current collector plate 122.

The first terminal current collector plate 122 may extend along the first direction x and include a body part 122a having a substantially plate shape and a protrusion 122b provided at a center of the body part 122a in the first direction x. The first terminal current collector plate 122 may electrically connect the first electrode current collector plate 121 and the first terminal 130.

An inner surface of the body part 122a may be in contact with and welded to the center portion 121a of the first electrode current collector plate 121 such that the body part 122a and first electrode current collector plate 121 are coupled to each other. The protrusion 122b may be provided at a center of an outer surface of the body part 122a to protrude toward the first terminal 130. In some embodiments, the protrusion 122b may have a cylindrical shape, and one circular surface may be coupled to the body part 122a. An outer surface of the protrusion 122b may be in contact with and coupled to the first terminal 130 by the welding. The outer surface 122ba of the protrusion 122b may be a curved surface that is convex outward. The outer surface 122ba of the protrusion 122b may be a surface facing the first terminal 130. The outer surface 122ba of the protrusion 122b may have a central area that protrudes most in a direction of the first terminal 130 and may have a curved surface that is gradually rounded toward an edge area or edge areas of the outer surface 122ba (see FIGS. 4 and 6). In some embodiments, the outer surface 122ba of the protrusion 122b may be a flat surface in some areas adjacent to the central area.

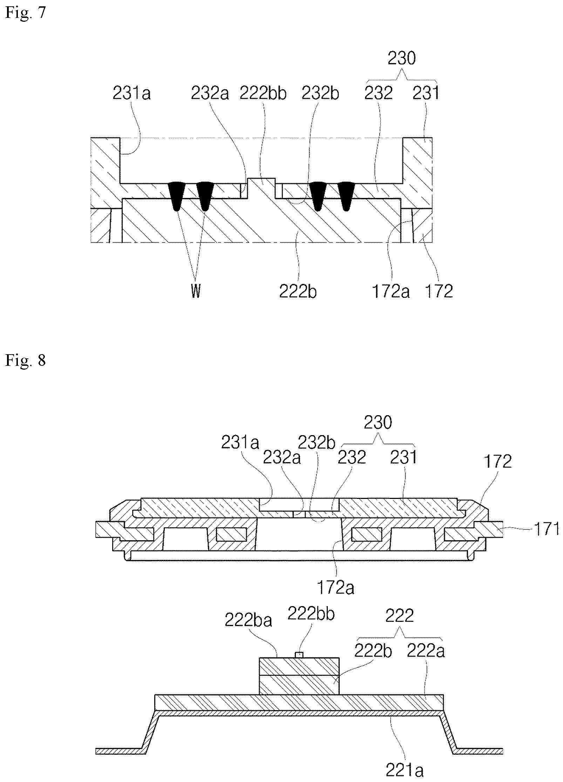

FIG. 7 illustrates a partial cross-sectional view of a current collector plate according to embodiments. FIG. 8 illustrates a front cross-sectional view of the current collector plate, the terminal to which the current collector plate is coupled, and an insulating member in FIG. 7.

Referring to FIGS. 7 and 8, in some embodiments, an outer surface 222ba of a protrusion 222b may be a flat plane. The outer surface 222ba of the protrusion 222b may be a surface facing a first terminal 230. The outer surface 222ba of the protrusion 222b may be provided as a straight plane from a center area to an edge area of the protrusion 222b. In some embodiments, an inner surface of the terminal 230, which is in contact with and welded to the outer surface of the protrusion 222b, may have a planar shape corresponding to the outer surface of the protrusion 222b.

As described above, the outer surface of each of the protrusions 122b and 222b may be curved or flat. In this specification, the protrusions 122b and 222b may differ only in the shapes of their outer surfaces, and other aspects of the protrusions 122b and 222b may be substantially similar or identical to each other. Further, the elements in FIGS. 7 and 8 which are the same as those in FIGS. 4 and 6 may be represented by the same or similar reference numerals. Thus, the description will be made below based on the protrusion 122b.

Referring to FIG. 4, in some embodiments, the central area of the protrusion 122b may protrude in the direction of the first terminal 130 and may further include a projection 122bb passing through the first terminal 130.

During the process of external penetration welding, close contact between the terminal and the current collector plate may be important. In some embodiments, a pressure may be applied from outside through internal components to ensure the close contact between the objects to be welded. However, determining whether there is close contact between the objects to be welded through the internal components may be difficult because the welding is performed. If good contact between the objects to be welded is not achieved, the current collector plate may be tilted, and, thus, welding defects may occur. In some embodiments, it is desirable to check whether there is good contact between the objects to be welded so as to minimize welding defects.

A through-hole 132a may be defined in the first terminal 130, and the projection 122bb may be disposed on an upper end surface of the protrusion 122b. The projection 122bb may pass through the through-hole 132a provided in the first terminal 130 and such that the projection 122bb is exposed to outside of the secondary battery. In some embodiments, contact between the first terminal 130 and the protrusion 122b of the first current collector 120 may be checked by examining whether the projection 122bb is exposed to outside of the secondary battery. And alignment between the first terminal 130 and the first current collector 120 may be facilitated through the projection 122bb.

In some embodiments, a stepped portion may be provided on an outer surface of the projection 122bb and an outer surface of a bottom part (welding area) of a terminal groove or recess 131a. The projection 122bb may protrude further than the outer surface of the bottom part (welding area) of the terminal groove 131a. The outer surface of the projection 122bb and the outer surface of the bottom part (welding area) of the terminal groove 131a may be offset from each other. For example, if the first cap assembly 170 is disposed in the case 160, the projection 122bb may be disposed in the through-hole 132a of the first terminal 130. In some embodiments, before bringing the case 160 and the first cap assembly 170 in preliminarily contact with each other, the stepped portion (height and radius) of the projection 122bb may be checked. A welding defect rate may be reduced by checking whether the contact between the first terminal 130 and the protrusion 122b is achieved based on the height and radius of the welded product.

If the outer surface of the projection 122bb and the outer surface of the bottom part (welding area) of the terminal groove 131a are designed to be disposed on the same line in a state of being in close contact between the first terminal 130 and the protrusion 122b, the outer surface of the projection 122bb and the outer surface of the bottom part of the terminal groove 131a may be disposed on the same line.

The first terminal 130 may be made of a metal and be electrically connected by the contact and welding to the outer surface 122ba of the protrusion 122b. The first terminal 130 may be made of aluminum or an aluminum alloy. The first terminal 130 may be disposed outside the first cap plate 171. The first terminal 130 may be a substantially rectangular plate. The first terminal 130 may include a first terminal plate 131 having a plate shape and a first welding area 132 formed to have a thickness that is less than that of the first terminal plate 131 by the terminal groove 131a that is concave inward at an approximate center of the first terminal plate 131. In addition, the terminal groove 131a may be provided inward from the outer surface of the first terminal plate 131. As such, the first terminal 130 may be provided with a stepped portion on the outer surface thereof by the terminal groove 131a.

The terminal groove 131a may be disposed in a partial area of the first terminal plate 131. The terminal groove 131a may be defined in an approximate central area of the first terminal plate 131 or in an area corresponding to the protrusion 122b of the first terminal current collector plate 122.

The first welding area 132 may have a flat outer surface, and an inner surface of the first welding area 132, which is in contact with and welded to the protrusion 122b of the first current collector 120, may correspond to the shape of the outer surface 122ba of the protrusion 122b. The inner surface 132b of the first welding area 132 may be concavely curved (see FIG. 4). In other embodiments, the inner surface 232b of the first welding area 232 may be provided as a flat plane (see FIG. 7). The inner surface 132b of the first welding area 132 may be coupled to the outer surface of the protrusion 122b of the first current collector 120 by the welding while being in contact with the outer surface of the protrusion 122b of the first current collector 120. The welding between the first welding area 132 and the protrusion 122b may be performed on the outer surface 122ba of the protrusion 122b.

In some embodiments, a welding bead W of the first welding area 132 and the protrusion 122b may be formed in a planar circular ring shape that is spaced apart from the through-hole 132a of the first terminal 130. In FIG. 4, two welding beads W are formed spaced apart from each other, but one or three or more welding beads W may be provided, and the number of welds is not limited thereto in this specification. The first terminal 130 and the first current collector 120 may be mechanically and electrically coupled to each other by the welding beads W. In some embodiments, a gap between the first terminal 130 and the first current collector 120 may be sealed by the welding beads W.

The first welding area 132 may further include a through-hole 132a passing through the center between the inner and outer surfaces of the first welding area 132. The through-hole 132a may have an inner diameter that is greater than an outer diameter of the projection 122bb of the first current collector 120. In other embodiments, the through-hole 132a may have an inner diameter equal to the outer diameter of the projection 122bb of the first current collector 120, and, thus, the projection 122bb of the first current collector 120 may be press-fitted into the through-hole 132a of the first welding area 132. The projection 122bb of the first current collector 120 may pass completely through the through-hole 132a and be exposed to outside of the secondary battery.

In some embodiments, a first insulating member 172 may be further disposed between the first terminal 130 and the first cap plate 171. The first insulating member 172 may also be disposed between the first terminal 130 and the first current collector 120. In particular, the first insulating member 172 may be disposed between an inner surface of the first terminal 130 and the first terminal current collector plate 122. The first insulating member 172 may be made of a resin material that does not react with the electrolyte, such as polyethylene (PE), polypropylene (PP), or polyethylene terephthalate (PET). The first insulating member 172 may be elastically disposed between the first terminal 130 and the first cap plate 171 to improve sealing force between the first terminal 130 and the first cap plate 171. In some embodiments, the first terminal 130 and the first cap plate 171 may be electrically separated from each other.

The first insulating member 172 may have an insulating hole 172a through which the inner surface 132b of the first welding area 132 of the first terminal 130 is exposed in the direction of the first current collector 120. An inner diameter of the insulating hole 172a may be greater than the outer diameter of the protrusion 122b of the first current collector 120. In other embodiments, the inner diameter of the insulating hole 172a may be the same as the outer diameter of the protrusion 122b of the first current collector 120. The protrusion 122b of the first current collector 120 may be inserted or press-fitted into the insulating hole 172a of the first current collector 120 so as to be in contact with and welded to the inner surface 132b of the first welding area 132. In some embodiments, the protrusion 122b of the first current collector 120 may pass through the first insulating member 172 and be coupled to the first welding area 132 of the first terminal 130 by the welding.

Referring again to FIG. 2, the second current collector 140 may be made of metal and may electrically connect the second electrode plate 112 and the second terminal 150 to each other. The second current collector 140 may be formed as a metal plate and may include a second electrode current collector plate 141, which is in contact with and coupled to the second electrode tab of the second electrode plate 112, and a second terminal current collector plate 142, which is in contact with and coupled to the second terminal 150. In some examples, the second current collector 140 may be formed to be symmetrical to the first current collector 120 with respect to the electrode assembly 110 and may be coupled to the electrode assembly 110 and the second terminal 150. The second current collector 140 may be made, for example, of copper or a copper alloy.

The second terminal 150 may be made of metal and may be electrically connected to the second current collector 140. The second terminal 150 may be located outside a second cap plate 181. A second insulating member 182 may be further interposed between the second terminal 150 and the second cap plate 181.

In some embodiments, the second terminal 150 may be made of different metals. For example, the second terminal plate 151 may be made of aluminum or an aluminum alloy, and the second welding area 152 may be made of copper or a copper alloy. In some embodiments, the second welding area 152 may have a flat plate shape extending along an inner surface of the second terminal plate 151. A clad sheet (not shown) may be further provided between the inner surface of the second terminal plate 151 and the outer surface of the second terminal plate 151, which is in contact with the second terminal plate 151. The clad sheet may couple and electrically connect the second terminal plate 151 made of multiple metals to the second welding area 152. For example, the clad sheet may be a sheet in which an aluminum sheet and a copper sheet are bonded by thermal compression. More specifically, the clad sheet may be a sheet in which aluminum having a thickness of about 2 mm and copper having a thickness of about 0.5 mm to about 0.7 mm are bonded by thermal compression. The aluminum sheet of the clad sheet may be coupled to the second terminal plate 151 by the welding, and the copper sheet may be coupled to the second welding area 152 by the welding.

The second terminal 150 may have a shape and structure that are similar to or the same as those of the first terminal 130. Further, the second terminal 150 may be coupled to the electrode assembly 110 through the second current collector 140 in a shape that is symmetrical to the first terminal 130 with respect to the electrode assembly 110. In some embodiments, the second cap plate 181 and the second insulating member 182 may have the same shape and structure as the first cap plate 171 and the first insulating member 172, respectively.

The case 160 may have a substantially hollow rectangular parallelepiped shape and include openings 161 and 162 formed at opposite sides of the case 160. The electrode assembly 110 coupled to the first current collector 120 and to the second current collector 140 may be inserted into the case 160 through the openings 161 and 162.

The case 160 may include rectangular upper and lower short side surfaces extending in the second direction y, which is the longitudinal direction of the case. Two rectangular long side surfaces may interconnect the upper short side surface and the lower short side surface and extend in the second direction y. The upper and lower short side surfaces and the two long side surfaces of the case 160 may be integrally formed with each other. In an embodiment, a third direction z may be a direction perpendicular to the first direction x and the second direction y.

The case 160 may have a vent hole passing through either short sides or long sides. A safety vent 163 may be mounted in the vent hole in the case 160. The safety vent 163 may include a notch formed to be thinner than the other areas such that the safety vent 163 opens at a set pressure.

The first cap assembly 170 may be coupled to the left opening 161 in the case 160. In some examples, the first cap assembly 170 may include the first cap plate 171 and the first insulating member 172. The first cap plate 171 may have a rectangular flat plate shape and may seal the left opening 161 in the case 160. The first cap plate 171 may include a terminal hole and an electrolyte injection hole formed therein that extends between the outer surface and the inner surface of the first cap plate 171. The protrusion 122b of the first current collector 120 may pass through the terminal hole in the first cap plate 171 to be coupled to the first terminal 130. In some examples, the electrolyte injection hole may be sealed by a cap 173 after the first cap plate 171 is coupled to the case 160 and the electrolyte is injected into the case 160. The first insulating member 172 may be disposed between the outer surface of the first cap plate 171 and the first terminal 130 and between the first terminal 130 and the first current collector 120.

In the secondary battery 100, the first cap assembly 170 coupled to the first terminal 130 may be coupled to one opening in the case 160, and the second cap assembly 180 coupled to the second terminal 150 may be coupled to the other opening in the case 160, whereby the first terminal 130 and the second terminal 150 may be located at opposite sides of the case 160. Because the first terminal 130 and the second terminal 150 are provided at opposite sides of the secondary battery 100, if a plurality of secondary batteries 100 are combined in a module form, cooling members (not shown) may be coupled to upper and lower regions of the case 160, thereby reducing deterioration of the secondary battery 100 and improving cooling performance.

In one example, in a battery module in which the long side surfaces of the plurality of secondary batteries 100 are disposed so as to face each other, the first terminal and/or the second terminal exposed at opposite sides of each secondary battery may be electrically connected to the first terminals and/or the second terminals of the other secondary batteries.

Further, because the first terminal 130 and the second terminal 150 are provided at opposite sides of the secondary battery 100, if a plurality of secondary batteries 100 are combined in a module form, charge/discharge current may flow along the terminals provided on the different sides among the sides of the plurality of secondary batteries. Thus, deterioration may be reduced compared to a structure in which two terminals are provided together on one side of a secondary battery and charge/discharge current flows along the two terminals on one side. Furthermore, if a plurality of secondary batteries 100 are combined in a module form, the terminals provided on the same side among opposite sides may be connected to each other, and, thus, the module may be compact.

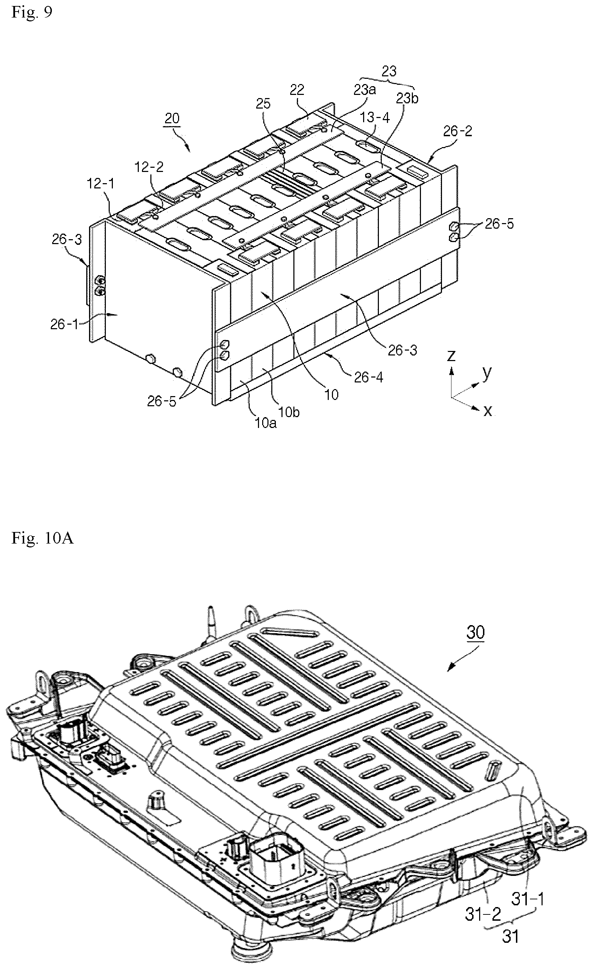

FIG. 9 is a perspective view of an example of a battery module 20. Referring to FIG. 9, the battery module 20 according to one or more embodiments of the present disclosure includes electrode units 12-1 and 12-2, a plurality of battery cells 10 arranged in one direction, a connection tab 22 connecting a battery cell 10a to an adjacent battery cell 10b, and a protection circuit module 23 having one end connected to the connection tab 22. The protection circuit module 23 may include a battery management system (BMS). Further, the connection tab 22 may include a body portion in contact with the electrode units 12-1 and 12-2 between the adjacent battery cells 10a and 10b and an extension portion extending from the body portion and connected to the protection circuit module 23. The connection tab 22 may be, for example, a bus bar.

Each battery cell 10 may include a battery case, an electrode assembly received (or accommodated) in the battery case, and an electrolyte. The electrode assembly and the electrolyte react electrochemically to store and release (e.g., generate) energy. Terminal parts 12-1 and 12-2 electrically connected to the connection tab 22 and a vent 13-4 as a discharge passage for gas generated inside the battery case may be provided on one side of (e.g., an upper side of) the battery cell 10. The terminal parts 12-1 and 12-2 of the battery cell 10 may be a positive electrode terminal 12-1 and a negative electrode terminal 12-2 having different polarities from each other, and the terminal parts 12-1 and 12-2 of the adjacent battery cells 10a and 10b may be electrically connected to each other in series or parallel by the connection tab 22, to be described in more detail below. Although a serial connection has been described as an example, the connection structure is not limited thereto, and various connection structures may be employed as desired or necessary. In addition, the number and arrangement of battery cells is not limited to the structure shown in FIG. 9 and may be changed as desired or necessary.

The plurality of battery cells 10 may be arranged in (e.g., may be stacked in) one direction so that the wide surfaces of the battery cells 10 face each other, and the plurality of battery cells 10 may be fixed by the housings 26-1, 26-2, 26-3, and 26-4. The housings 26-1, 26-2, 26-3, and 26-4 may include a pair of end plates 26-1 and 26-2 facing the wide surfaces of the battery cell 10 and a side plate 26-3 and a bottom plate 26-4 connecting the pair of end plates 26-1 and 26-2 to each other. The side plate 26-3 may support side surfaces of the battery cells 10, and the bottom plate 26-4 may support bottom surfaces of the battery cells 10. In addition, the pair of end plates 26-1 and 26-2, the side plate 26-3 and the bottom plate 26-4 may be connected by bolts 26-5 and/or any other suitable fastening members and methods known to those of ordinary skill in the art.

The protection circuit module (PCM) 23 may have electronic components and protection circuits mounted thereon and may be electrically connected to connection tabs 22, to be described in more detail later. The protection circuit module 23 includes a first protection circuit module 23a and a second protection circuit module 23b extending along the direction in which the plurality of battery cells 10 are arranged in different locations. The first protection circuit module 23a and the second protection circuit module 23b may be spaced from each other at a suitable interval (e.g., a predetermined interval) and arranged parallel to each other to be electrically connected to adjacent connection tabs 22, respectively. For example, the first protection circuit module 23a extends on one side of the upper portion of the plurality of battery cells 10 along the direction in which the plurality of battery cells 10 are arranged, and the second protection circuit module 23b extends to the other upper side of the plurality of battery cells 10 along the direction in which the plurality of battery cells 10 are arranged. The second protection circuit module 23b may be spaced from the first protection circuit module 23a at a suitable interval (e.g., a predetermined interval) with the vents 13-4 interposed therebetween but may be disposed parallel to the first protection circuit module 23a. As such, the two protection circuit modules are spaced from each other side-by-side along the direction in which the plurality of battery cells 10 are arranged, thereby reducing or minimizing the area of the printed circuit board (PCB) constituting the protection circuit module. By separately configuring the protection circuit module into two protection circuit modules, unnecessary PCM area can be reduced or minimized. In addition, the first protection circuit module 23a and the second protection circuit module 23b may be connected to each other by a conductive connection member 25. One side of the conductive connection member 25 is connected to the first protection circuit module 23a, and the other side thereof is connected to the second protection circuit module 23b so that the two protection circuit modules 23a and 23b can be electrically connected with each other.

The connection may be performed by any one of soldering, resistance welding, laser welding, projection welding and/or any other suitable connection methods known to those of ordinary skill in the art.

In addition, the connection member 25 may be, for example, an electric wire. In addition, the connection member 25 may be made of a material having elasticity or flexibility. By the connecting member 25, it may be possible to check and manage whether the voltage, temperature, and/or current of the plurality of battery cells 10 are normal. For example, the information received by the first protection circuit module from connection tabs adjacent to the first protection circuit module, such as voltage, current, and/or temperature, and the information received from connection tabs adjacent to the second protection circuit module, such as voltage, current, and/or temperature, may be integrated and managed by the protection circuit module through the connection member 25.

In addition, when the battery cell 10 swells, shocks may be absorbed by the elasticity or flexibility of the connection member 25, thereby preventing the first and second protection circuit modules 23a and 23b from being damaged. In addition, the shape and structure of the connection member 25 is not limited to the shape and structure shown in FIG. 9.

As described above, because the protection circuit module 23 is provided as the first and second protection circuit modules 23a and 23b, the area of the PCB constituting the protection circuit module can be reduced or minimized, and the space inside the battery module can be secured, which improves work efficiency by facilitating a fastening work for connecting the connection tab 22 and the protection circuit module 23 and repair work if (or when) an abnormality is detected in the battery module.

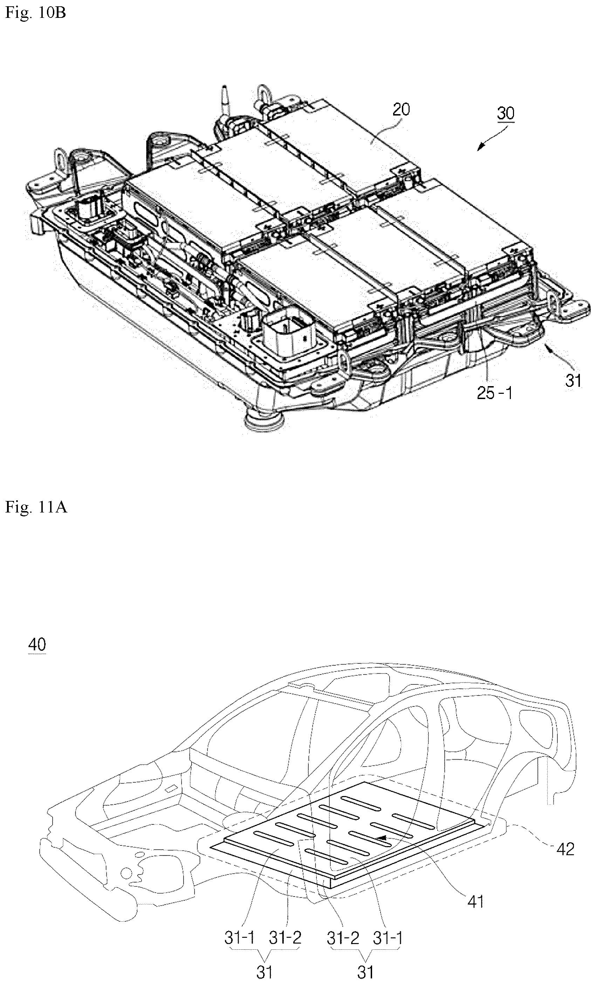

FIGS. 10A and 10B illustrate perspective views of an example of a battery pack 30.

The battery pack 30 may include a plurality of battery modules 20 and a housing 31 for accommodating the plurality of battery modules 20. For example, the housing 31 may include first and second housings 31-1 and 31-2 coupled in opposite directions through the plurality of battery modules 20. The plurality of battery modules 20 may be electrically connected to each other by using a bus bar 25-1, and the plurality of battery modules 20 may be electrically connected to each other in a series/parallel or series-parallel mixed method, thereby obtaining desired (e.g., required) electrical output.

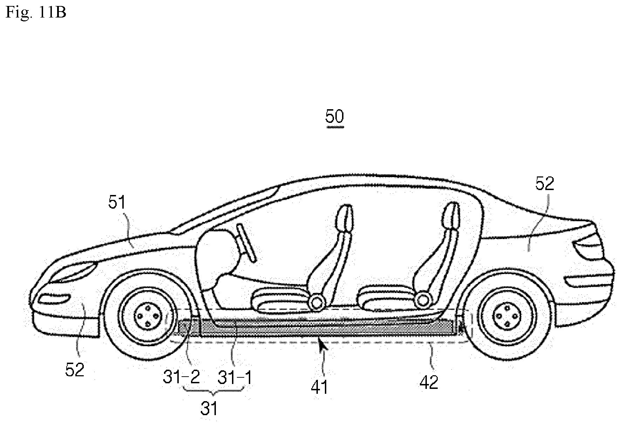

FIGS. 11A and 11B illustrate perspective and side views of examples of a vehicle body and a vehicle components 40.

In FIG. 11A, a battery pack 30 may include a battery pack cover 31-1, which is a part of a vehicle underbody 41, and a pack frame 31-2 disposed under the vehicle underbody 41. The pack frame 31-2 and the battery pack cover 31-1 may be integrally formed with a vehicle floor 42. The vehicle underbody 41 separates the inside and outside of a vehicle, and the pack frame 31-2 may be disposed outside the vehicle. In FIG. 11A, the battery pack cover 31-1 may correspond to the first housing 31-1 of FIG. 10A. In FIG. 11A, the pack frame 31-2 may correspond to the second housing 31-2 of FIG. 10A.

Referring to FIG. 11B, a vehicle 50 may be formed by combining additional parts, such as a hood 51 in front of the vehicle and fenders 52 respectively located in the front and rear of the vehicle to a vehicle body 40.

The vehicle 50 may include the battery pack 30 that include the battery pack cover 31-1 and the pack frame 31-2, and the battery pack 30 may be coupled to the vehicle body 40.

According to the embodiments, the secondary battery may be provided, in which if the welding is performed between the terminal and the current collector plate, the protrusion disposed on the upper end surface of the current collector plate is visible through the hole of the terminal to check whether the objects to be welded are in close contact with each other, thereby reducing the welding defects and improving the coupling force.

Although the present disclosure has been described with reference to embodiments and drawings illustrating aspects thereof, the present disclosure is not limited thereto. Various modifications and variations can be made by a person skilled in the art to which the present disclosure belongs within the scope of the technical of the present disclosure and the claims and their equivalents, below.

## Claims

1. A secondary battery comprising:
an electrode assembly provided with an electrode tab;
a current collector electrically coupled to the electrode tab;
a case accommodating the electrode assembly and the current collector;
a cap plate sealing the case; and
a terminal mechanically and electrically coupled to the current collector and disposed on the cap plate,
wherein the current collector comprises:
an electrode current collector plate welded to the electrode tab; and
a terminal current collector plate extending from the electrode current collector plate towards the terminal and including a protrusion welded to the terminal,
wherein the protrusion comprises a projection that passes through the terminal at a central area thereof so as to be exposed to outside of the secondary battery.

2. The secondary battery as claimed in claim 1, wherein the terminal comprises:
a flat terminal plate; and
a welding area provided with a terminal groove that is concave inward at a center of an outer surface of the terminal plate, the welding area having a thickness that is less than a thickness of a peripheral area of the terminal plate.

3. The secondary battery as claimed in claim 2, wherein the terminal groove is provided in an area corresponding to the protrusion.

4. The secondary battery as claimed in claim 2 or 3, wherein the terminal further comprises a through-hole that extends between an inner surface and an outer surface of the welding area.

5. The secondary battery as claimed in claim 4, wherein the through-hole of the terminal has an inner diameter that is greater than or equal to an outer diameter of the projection.

6. The secondary battery as claimed in claim 4 or 5, wherein an outer surface of the projection and the outer surface of the welding area are offset from each other.

7. The secondary battery as claimed in claim 6, wherein the projection protrudes beyond the outer surface of the welding area.

8. The secondary battery as claimed in any one of claims 4 to 7, wherein at least part of an outer surface of the protrusion is in contact with the inner surface of the welding area.

9. The secondary battery as claimed in any one of claims 4 to 8, wherein a welding bead is formed between the terminal and the terminal current collector plate, with the welding bead having a circular ring shape and being spaced apart from the through-hole of the terminal.

10. The secondary battery as claimed in any preceding claim, wherein the terminal current collector plate further comprises a plate-shaped body part that is in contact with and welded to the electrode current collector plate, and
wherein the protrusion protrudes outward from an outer surface of the body part.

11. The secondary battery as claimed in claim 10, wherein the protrusion is cylindrically shaped and has a circular surface coupled to the body part of the terminal current collector plate and optionally
wherein the protrusion includes an outer surface that is in contact with and welded to the terminal.

12. The secondary battery as claimed in claim 11, wherein the outer surface of the protrusion includes a curved surface that is convex outward, and optionally
wherein an inner surface of the terminal is in contact with and welded to the outer surface of the protrusion, and the inner surface of the terminal includes a curved surface with a shape corresponding to a shape of the outer surface of the protrusion.

13. The secondary battery as claimed in claim 11, wherein the protrusion includes a planar outer surface that is in contact with and welded to the terminal.

14. The secondary battery as claimed in claim 11, wherein the outer surface of the protrusion is formed in a flat plane, and optionally
wherein an inner surface of the terminal is in contact with and welded to the outer surface of the protrusion, and the inner surface of the terminal is formed as a plane with a shape corresponding to a shape of the outer surface of the protrusion.

15. The secondary battery as claimed in any preceding claim, wherein the electrode current collector plate comprises:
a central portion including an outer surface that is coupled to the terminal current collector plate by welding; and
edge portions extending in opposite directions from the central portion and welded to the electrode tab of the electrode assembly, and
wherein the central portion protrudes outward with respect to the edge portions, and optionally
wherein the electrode current collector plate further comprises connection parts that are inclined from the central portion to the edge portions.
